Europäisches Patentamt

(19) European Patent Office

Office européen des brevets

(11) Publication number : **0 250 070 B1**

## EUROPEAN PATENT SPECIFICATION

(45) Date of publication of patent specification :
27.05.92 Bulletin 92/22

(51) Int. Cl.$^5$: **G01N 21/47,** G01N 21/59, G01N 21/35

(21) Application number : 87303386.4

(22) Date of filing : 16.04.87

(54) **Optical analysis method and apparatus having programmable rapid random wavelength access.**

(30) Priority : 28.04.86 US 856289

(43) Date of publication of application :
23.12.87 Bulletin 87/52

(45) Publication of the grant of the patent :
27.05.92 Bulletin 92/22

(84) Designated Contracting States :
AT BE CH DE ES FR GB GR IT LI LU NL SE

(56) References cited :
US-A- 3 828 173
US-A- 4 052 121
US-A- 4 285 596
US-A- 4 602 342
ANALYTICAL CHEMISTRY, vol. 12, October 1983, American Chemical Society DAVID L. WETZEL "Near Infrared Reflectance Analysis"

(56) References cited :
JOURNAL OF THE OPTICAL SOCIETY OF AMERICA,vol 59,no. 6 1969 S.E. HARRIS, R.W. WALLACE "Acousto-Optic Tunable Filter" APPLIED PHYSICS LETTERS, vol. 25, no. 7,October 1974;I.C.CHANG "Noncollinear Acousto-Optic filter with large angularaperture"

(73) Proprietor : **Bran + Lübbe GmbH**
**Werkstrasse 4**
**W-2000 Norderstedt (DE)**

(72) Inventor : **Kemeny, Gabor J.**
**31 Upper Croton Avenue**
**Ossining§New York 10562 (US)**
Inventor : **Wetzel, David L.**
**515 Oakdale Drive**
**Manhattan§Kansas 66502 (US)**

(74) Representative : **Vonnemann, Gerhard Dr.-Ing. et al**
**Meyer, Stach, Vonnemann Patentanwälte**
**Jungfernstieg 38**
**W-2000 Hamburg 36 (DE)**

## Description

## BACKGROUND OF THE INVENTION

### 1. FIELD OF THE INVENTION

The present invention relates to optical analyzing instruments, and more particularly to reflective or transmissive optical analyzing instruments for determining the composition of solid, liquid, slurry or paste samples by their near-infrared, infrared or visible absorbances, especially for industrial on-line monitoring applications.

The present invention also relates to a method of optical concentration analysis of a sample.

### 2. DESCRIPTION OF THE PRIOR ART

An empirical correlation near-infrared reflectance analysis method was first suggested and elaborated on by Karl H. Norris of the United States Department of Agriculture, Beltsville, Maryland, in the mid 1960s. It was observed that different wavelengths of near-infrared radiation incident on the surface of the sample are absorbed or reflected to certain extents, depending on the characteristics and concentrations of the constituents of the sample. The reflected radiation is collected by suitable optics and measured by a suitable detector arrangement. The concentrations of the material to be measured can be calculated from the radiation intensities measured at different wavelengths.

A more detailed history and background on this subject is contained in the article "Near-Infrared Reflectance Analysis" by David L. Wetzel, Analytical Chemistry, vol. 55, p. 1165A (American Chemical Society 1983).

Various instruments comprising different monochromators have been previously described for accomplishing the above results. Most of these systems were directed to laboratory analysis of samples. However, instrumental principles and systems disclosed in the prior art are not practical to use in industrial on-line concentration monitoring.

For example, in on-line monitoring, the samples are moving and, in many cases, are inhomogeneous. Thus, to achieve the monitoring goals, a large number of measurements must be made in a very short time and the results averaged to reduce errors. In addition to the averaging requirement, it is necessary to correct for the rapid changing of the sample. It is also desirable to use optical data taken from the same part of the sample in a calibration equation. These results can be achieved in principle by applying a "stopped-flow" sampling, but this procedure is less representative of the bulk of the sample and is also much too slow for most control purposes.

Prior art interference filter systems with a perpendicular direction of light beam are described in U.S. Patents 3,828,173 and 4,236,076. In both systems, discrete wavelength interference filters are mounted in a turret. Thus, the rate of the wavelength selection is limited by the mechanical means to rotate the turret.

Of special note are interference filter instrument systems described in U.S. Patents 4,286,327 and 4,404,642. As light sources, infrared emitting diodes (IREDs) are used, whereas all other known instruments in the prior art utilize wide wavelength band quartz tungsten-halogen light sources. The advantage of the special light source is that it has a relatively low dissipation in comparison with conventional light sources and can be activated very rapidly by a timer through a microcomputer. In exchange for these advantages, the wavelength region is constrained to the region of the infrared emitting diodes (about 850-1050 nm). In this constrained region, a very sensitive Si detector can be used but only a few chemical components show characteristic absorbances.

Tilting interference filter systems are described in U.S. Patents 3,861,788 and 4,082,464. The interference filters are mounted on paddle wheels, and rotated to provide a wavelength shift as the angle of the filter and the incident beam varies in time. These systems produce continuous wavelength change, but only very small fractions of the whole rotation can be considered "useful" time, when the filter is accurately producing the required wavelengths. There is also considerable "dead" time when the beam is mechanically blocked between filters.

Diffraction grating systems for optically analyzing samples are also known. For example, vibrating holographic grating systems, capable of up to ten scans per second are shown in U.S. Patents 4,264,205, 4,285,596 and recently in U.S. Patent 4,540,282. The vibrating grating principle allows only sequential access to the individual wavelengths as the whole spectrum is swept through in time. One of the disadvantages in the high speed applications of grating monochromators is that the signal-to-noise ratio cannot be enhanced by chopping and narrow noise bandwidth phase sensitive (lock-in) amplification. This technique can only be applied in slow point-to-point scan grating systems, where the grating is stopped at every required wavelength, and enough light chopping periods are allowed to elapse for the signal intensity to be precisely measured. Thus, the total spectrum mesaurement time is increased up to about a minute.

Another trade-off in mechanical (rotating sector) chopper systems is, that only half of the mesaurement time is utilized by the detector for the purpose of collecting light at the required wavelength. In the other half of the period, a fast dark compensation occurs, carrying no "wavelength Information". Lock-in amplification is described in U.S. Patent 4,236,076, where the light is modulated by chopping the light, periodically referencing by a tilting mirror and changing the wavelength by changing interference filters in the beam. A disadvantage of this system for the monitoring of rapidly changing material is that the wavelength change is the slowest of the mentioned three modulations, the rate being several seconds between consecutive wavelength choices.

Further increases in the speed and improvement of the efficiency of the monochromator and the analyzer system lead to serious problems with mechinical monochromatic systems that are known in the art.

Non-mechanically tunable optical devices including acousto-optical tunable filters (AOTF) have been described in the article "Acousto-Optic Tunable Filter" by S. E. Harria and R. W. Wallace, Journal of the Optical Society of America, vol. 59, pp. 744-747 (Optical Society of America 1969). An early described model was tunable from 400 nm to 700 nm by applying 428-990 MHz acoustic frequency via an acoustic transducer layer attached to a LiNbO crystal. Since then, various acouato-optic devices have been described in "Noncollinear Acousto-optic Filter with Large Angular Aperture" by I. C. Chang, Applied Physica Letters, vol. 25, pp. 370-372 (American Institute of Physics 1974), and also disclosed in U.S. Patents 3,679,288; 3,944,334; 3,944,335; 3,953,107; 4,052,121, and 4,342,502. In the above-mentioned prior art, the geometry, the material of the crystal used and the optical arrangement varies.

However, one common feature is that all acoustooptic tunable filters utilize the principle that the direction of propagation and the direction of polarization of an appropriate incident ray is changed by the application of a high frequency optical modulation of the crystal. The different frequencies give rise to different densities of index of refraction fronts due to local stresses caused by the acoustic waves. This tuning can be activated over a relatively wide frequency (wavelength) range, thus rendering the device ideal for optical tuning purposes.

## SUMMARY OF THE INVENTION

The invention relates to an apparatus for providing rapid random wavelength access for optical analysis of a sample according to Claim 1 and to a method of optical concentration analysis of a sample according to Claim 12.

Accordingly, a periodic alternation is made between preselected wavelength pairs to permit optical analysis of at least two optical qualities of the sample.

One of the basic recognitions in the present invention is that the increase of the wavelength selection rate has substantial limitations if pursued in a mechanical manner. It was therefore established that one of the electro-optical, electromagneto-optical or acousto-optical tunable devices must be included in a new optical system in order to achieve shorter wavelength access time. On the basis of the wavelength range and tunability, the AOTF was preferred for incorporation in a new system.

It should be noted that the optimal wavelengths and wavelength combinations vary from application to application. Thus, in a general purpose instrument it is very desirable to have access to all wavelengths in any random manner.

It was further recognized that random wavelength access is desirable and possible with an AOTF while avoiding the unnecessary "dead" times typically associated with rotating or tilting filters, or the serial wavelength accessibility typical of the grating monochromator systems.

It was also recognized that along with the computer controlled electronic wavelength selection, the necessary chopping or wavelength modulation can also be carried out without any moving parts, thus significantly simplifying the construction of such an optical analysis instrument.

It was further recognized in the present invention that with the previous "on-off" chopping mode, every second half-cycle of time carries no wavelength characteristic information. When the radiation is blocked, the signal is used only to correct for the background.

With a fast tunable device, as in the proposed AOTF wavelength modulations, wherein the radiation is not blocked in every half cycle, the signal intensity is measured at an alternative wavelength. The frequency of this wavelength modulation is used as a reference for a phase sensitive amplification.

It is also recognized that tuning can be carried out by initiating the change of the base wavelength selection, providing a constant periodic signal during the whole measurement.

It is further recognized that complex optical instruments containing numerous moving parts are more susceptible to failure, more sensitive to vibration and to changing thermal conditions. In addition, the instruments in the prior art containing interference filters are sensitive to thermal changes, resulting in a shift of the peak transmittance wavelength with different temperatures. The simple optical layout and the nature of the wavelength selection of the AOTFs according to the present invention are insensitive to vibrations or to ambient temperature changes except to sudden temperature shocks.

The objects of the invention are achieved by a system comprising an AOTF. The light emerging from a wide band source, such as a quartz tungsten-halogen lamp, is collimated and polarized by a suitable polarizer. Relatively inexpensive sheet-type polarizers are available. However, their extinction ratio is not uniformly good throughout the entire visible or near-infrared spectrum. Glan-Thompson or Glan-Taylor type polarizers develop an extinction ratio better than 10⁻⁵, thereby supressing the non-modulated light much better, but are more expensive. The input and output beams are colinear as in the case of the sheet polarizers. Wollaston prism type polarizers are also potentially useful because of their good extinction ratio, but the input and output beams are not colinear, and the angle deviation must be considered in the optical design.

With crossed polarizers placed in front of the AOTF and behind it, only the tuned ordinary or the tuned extraordinary beam is selected and the unmodulated traversing light is diverted or absorbed by the second polarizer. As the input polarization direction, either the vertical or horizontal direction can be chosen. The selection determines which of the output beams can be used.

The AOTF is driven by a sweep oscillator, which provides the necessary input for the acoustic transducer mounted on the crystal. For easy control interfacing, the voltage tuned sweep oscillators are advantageous.

It was also recognized that in order to utilize the advantages of a high speed system, the choice of detectors should be based on their speed along with their sensitivity, noise equivalent power (NEP) and wavelength range. In contrast to most other optical analyzers in the prior art, where Si or PbS detectors are used, the apparatus according to the present invention along with the Si, PbS, PbSe detectors may comprise Ge or cooled Ge detectors to match the speed of the AOTF and yet retain a wide enough wavelength range.

A further recognition is that the fiber optic light transmission can very advantageously be applied in conjunction with the AOTF. Optical fibers are small diameter light conducting materials, with a small light input diameter and a limited light acceptance cone. In order to couple light into optical fibers, the light must be focused onto the end of the small fiber with no more than the cone of acceptance. The non-distorted, collimated (and modulated) light emerging from the AOTF is ideally suited for focusing with the above requirements, with the help of a simple aspheric lens or an off-axis parabolic mirror.

The result of the optical analysis is calculated by substituting the measured light intensity values, into optimal calibration equations.

## DESCRIPTION OF THE DRAWINGS

In the accompanying drawings,

FIG. 1 shows an optical arrangement of a commercially available AOTF and the polarization characteristics thereof;

FIG. 2 shows a near-infrared spectral portion (reflectance spectra) of wheat samples with different (increasing) moisture content;

FIG. 3 shows two tuning control schemes for a tunable sweep oscillator incorporating the present invention;

FIG. 4 shows different tuning schemes for the tunable sweep oscillator input;

FIG. 5 shows the optical path and basic components of the apparatus incorporating the invention;

FIG. 6 shows a simplified schematic electronic block diagram thereof;

FIG. 7 shows a fiber optic transmission of modulated light to the site of the measurement; and,

FIG. 8 shows a simplified schematic block diagram of a remote optical head utilizing fiber optic illumination.

## DETAILED DESCRIPTION OF THE INVENTION

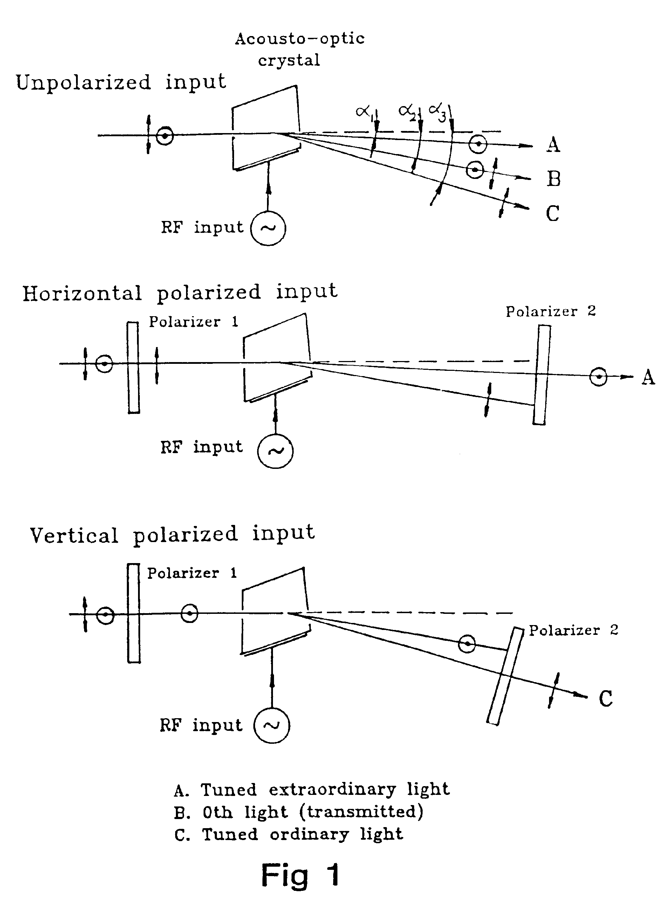

Referring to Fig. 1, if the wide band input light is polarized, another polarizer (the so-called analyzer) can select the tuned monochromatic ray from the traversing untuned polychromatic light. In a commercially available AOTF having an optical arrangement such as shown in Fig. 1, the wavelength accessibility is influenced by the size and geometry of the acousto-optic crystal and the velocity of the sound traveling in the crystal. Thus, a 100 to 100,000-fold advantage in the speed of the wavelength change rate may be obtained compared to other prior art analyzers. ,

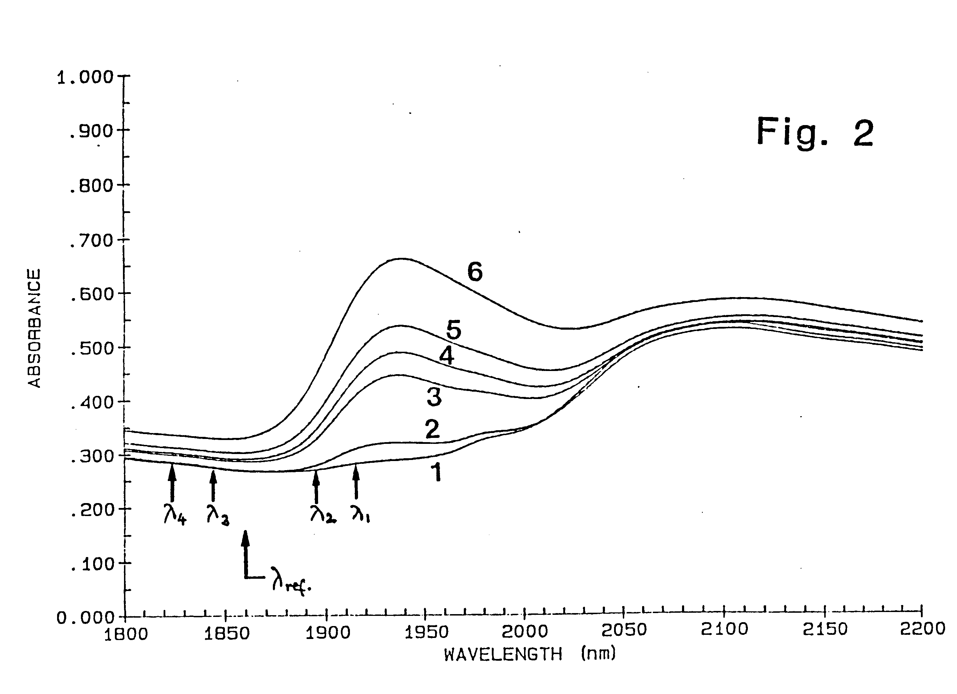

Referring to Fig. 2, a portion of the near infrared reflectance spectra of six ground wheat samples with increasing (different) moisture contents is shown. As will be seen, this constituent can be quantitated by measuring the height of the peak around 1940 nm. To correct for the baseline changes, most pronounced on spectrum 6, a reference wavelength ($\lambda_{ref}$) can be used, for example. Another option is to use the difference spectrum, the extreme case being the derivative of the spectrum. This approach will not contain the baseline shifts originating from particle size differences, background radiation or other effects, but only the steeper spectral changes. Thus, the differences between the intensities between $\lambda_1$ and $\lambda_2$ also characterize the amount of moisture in the sample. Another or a plurality of differences ($\lambda_3$, $\lambda_4$, etc.) can be included in the calibration equation.

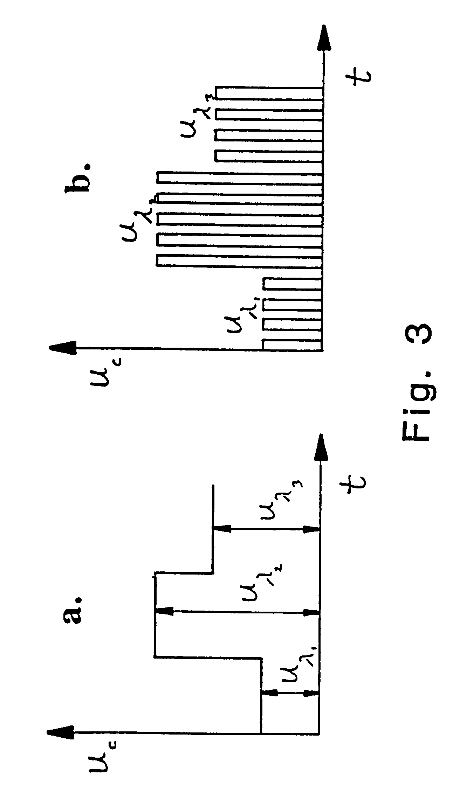

Tuning schemes, such as shown in Fig. 3, include a selection of different wavelengths by applying different control input voltages ($U_c$) to a tunable sweep oscillator. Under this arrangement, there is either no lock-in amplification or only a mechanical chopping, which should be faster than the wavelength change. A control scheme such as shown in Fig. 3b, furnishes rapid on-off tuning of the sweep oscillator. Besides selecting $\lambda_1$, $\lambda_2$ or $\lambda_3$ (by selecting $U_c$ control voltages) the rapid on-off provides electronic chopping and does that only on the selected wavelength.

With a phase sensitive detection (lock-in amplification), only the preferred selected wavelength information is amplified and all other background signals and noise of other frequencies are suppressed. With this chopping scheme, the frequency is controlled electronically and is thus kept very precise in comparison with frequency error experienced with mechanical chopping devices.

The band width of the amplification is therefore much narrower, reducing the noise of the apparatus. The noise can be further reduced by the usage of a narrow band pass prefilter or other electronic means.

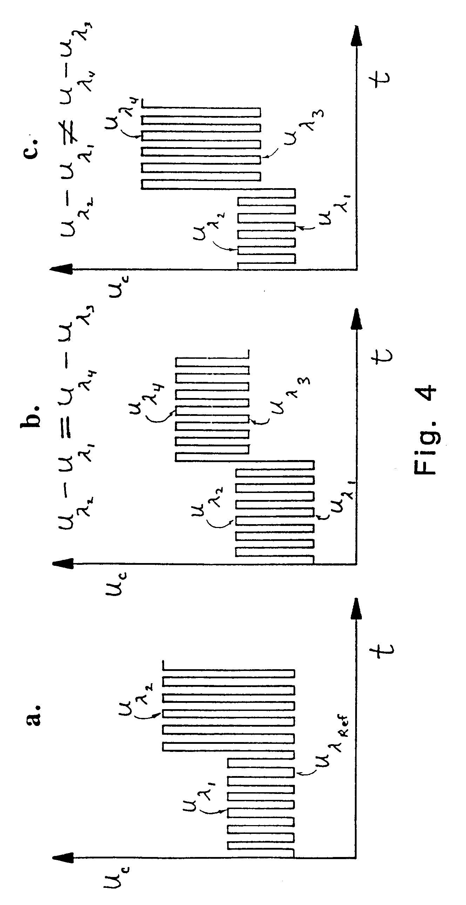

Various possible tuning schemes are contemplated as shown in Fig. 4. Fig. 4a shows $\lambda_1$ - $\lambda_{ref}$ - $\lambda_1$ -$\lambda_{ref}$ ... $\lambda_2$ - $\lambda_{ref}$ - $\lambda_2$ - $\lambda_{ref}$. sequences, where $\lambda_{ref}$ is constant throughout the whole experiment. The $\lambda_1$ - $\lambda_{ref}$ sequence is repeated as many times as required by the output of the lock-in amplifier (LIA) to be settled (typically 10-12 cycles) and sampled by the analog-to-digital converter (ADC), connected to the output of the lock-in amplifier. The lock-in amplifier usually has very narrow bandpass characteristics, but optionally the signal-to-noise ratio (SNR) can be further enhanced by inaerting a narrow band preamplifier at the input of the lock-in amplifier.

First derivative (first difference) spectrum modulation scheme is shown in Fig. 4b. The difference of the consecutive wavelength pairs is kept constant ($\lambda_2$ - $\lambda_1$ = $\lambda_4$ - $\lambda_3$), and similarly each pair is repeated as long as one measurement point can be taken and recorded via the lock-in amplifier and the ADC.

Tuning can be carried out by initiating the change of the base wavelength selection ($\lambda_1$ and $\lambda_3$) by a computer controlled digital-to-analog converter (DAC) via the tunable sweep oscillator, whereas the chopping modulation preferably originates from a signal generator circuit, providing a constant periodic signal during the whole measurement. This latter signal is simply added to the aforementioned base signal, the total control signal ($U_c$) being shown in Fig. 4b.

If only a few wavelengths are used for analytical purposes, they can be randomly selected by the computer control, as shown in Fig. 4c. The tuning difference is not kept constant in this instance.

Although any of the tuning schemes of Figs. 3 and 4 can be used, the scheme of Fig. 4b is easily implemented up to very high speeds without sophisticated computer hardware or software. A separate signal generator provides the high frequency (up to 100 kHz) square-wave or sinewave signal that is added to the much slower changing base wavelength selection signal (0-10 kHz) generated by the DAC circuit, controlled by a microcomputer.

The reference signal from the signal generator circuit serves as an input for the narrow band phase sensitive amplifier (LIA). It is preferable to permit approximately 10-12 cycles of time to elapse for the LIA output to settle. The output is filtered and introduced into a computer controlled ADC. The rate of data acquisition is the rate of the base wavelength change. Therefore, it can be about 10-12 times slower than the highest speed event, the primary periodic wavelength modulation.

The fiber optic transmission of light from the monochromator, in this case from the AOTF to the optical head, where the light comes in contact with the sample, is advantageous. Only some minor electronic and optical components are exposed to the process environment, and the light source, monochromator, and most related electronics and computing means can be located elsewhere. The optical head serves to illuminate the sample and collect the radiation emerging from the sample.

If the sample is solid, the diffusely transmitted or reflected light cannot be gathered with sufficient efficiency back into another fiber. Thus, two different optical approaches are pursued. For clear liquids, the transmitted light may return to the main optical/electronic unit for detection via a second optical fiber, thus isolating the optical head electrically. This feature may be very advantageous in the determination of concentrations in explosive or otherwise hostile environments.

If the sample is diffusely scattering the light, it should be collected by an integrating sphere or a suitable mirror directly onto a (larger surface) detector. In this case, the optical head contains the collection optics, the detector(s) and the detector related electronics.

The result of the optical analysis is calculated by substituting the measured light intensity values into optimum calibration equations. It should be noted that the error of the analysis depends upon the error of the individual optical measurement and on the magnitude of the constant with which it is multiplied. The errors contributed to the individual terms are shown in the following equation 1.

$$Y[\%] = K_0 + K_1(I_1 + \varepsilon_1) + K_2(I_2 + \varepsilon_2) + K_3(I_3 + \varepsilon_3) \quad (1)$$

where Y is the chemical constituent to be measured, $K_0$ through $K_3$ are constants, $I_1$ is the signal intensity at wavelength $\lambda_1$, and $\varepsilon_1$ is the error at $_1$.

In order to reduce the total measurement error, the sum of the products $K_1 \varepsilon_1$ must be decreased. With the computer controlled electronic tuning, this error can be decreased by allowing different measurement times and number of averages for the different wavelengths.

It is known that by increasing the measurement time or the number of averages by N, the signal-to-noise ratio can be increased by N. In a certain calibration equation the given errors are multiplied by widely varying constants. Therefore, it is desirable to decrease the error at the wavelength where the K constant is large.

It is cumbersome to derive an analytical equation for optimum division of time between the various wavelengths, mainly because of the square root function of the error reduction. However it can be seen that for every error-constant distribution, there is an optimum time distribution, other than the equal sharing of measurement time.

In order to decrease the error, a longer time must be spent at wavelengths with larger constant multipliers. If we increase the time at one wavelength after a certain point, some other error terms start increasing at the remaining wavelength with the shrinking time compromising even the terms with smaller constants.

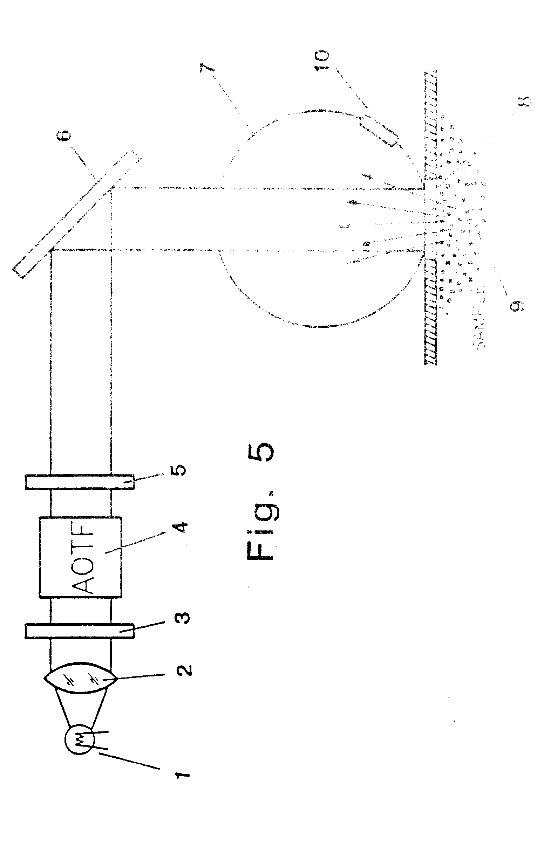

Fig. 5 shows the optical path of one of the preferred embodiments wherein a light source 1 is an incandescent wide-wavelength band quartz tungstenhalogen lamp. The light emerging from the light source 1 is collimated by a collimating lens 2.

The preferred embodiment is not limited to lens type collimating devices. Collimating mirrors, preferably off-axis parabolic mirrors, can also be used.

The collimated light traverses through a polarizer 3, which selects one of the polarization components and either absorbs, reflects or directs the other component elsewhere. The collimated and polarized light enters an acousto-optic tunable filter (AOTF) 4. This AOTF 4 is arranged in a position and angle for optimum acceptance of the polarized input light for subsequent modulation.

Modulated monochromatic and unmodulated light emerges from the AOTF 4. The unmodulated component retains its angle of polarization, whereas the modulated component, namely the light with the selected wavelength, alters its direction of polarization by 90 degrees. The polarizer 5 is in a crossed position relative to a polarizer 3. Thus, only the selected modulated light component traverses through the polarizer 5.

The polarizers can be of any suitable known type that is effective in the selected wavelength region. However, the second polarizer 5 should be sensitive to small angle deviations of the emerging tuned beam. The sheet polarizer, for example, should be arranged perpendicular to the emerging tuned beam. The angle deviation may vary from 1 to 10, depending on the arrangement of the crystal (not shown) used in the AOTF 4 and the choice of the ordinary or the extraordinary beam. However, this small angle deviation is not shown in Fig. 5.

The selected modulated wavelength beam is directed onto the surface of the sample. In one preferred embodiment this is done by a mirror 6, through an optical window 8. A sample 9, in this case solid material, is placed near the opening of an integrating sphere 7. The light impinging on the sample 9 is partly reflected and partially penetrates the sample 9 where it is subjected to scattering, reflection and absorption. As a result, light emerges from the sample 9 back into the integrating sphere 7. The light encounters multiple reflections and eventually falls onto the surface of a detector 10.

The detector 10 can be one or more of the following types: Si, PbS, PbSe, Ge or cooled Ge, to enhance the long wavelength limit of this type of detector.

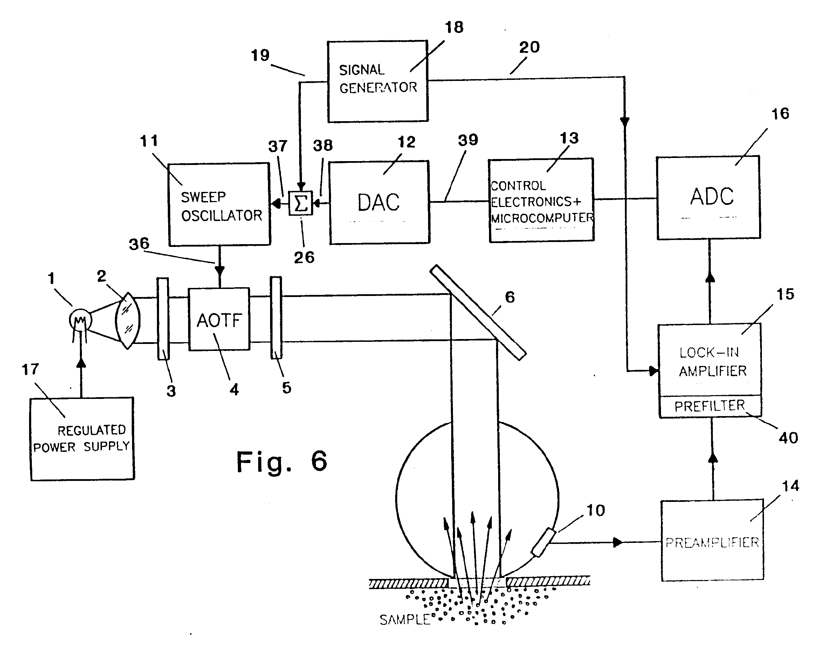

Referring to Fig. 6, the simplified electrical block diagram of the preferred embodiment, shows a sweep oscillator 11 connected to the AOTF 4, preferably via a short coaxial cable 36. The sweep oscillator 11 generates the necessary RF signal to drive the AOTF 4. Depending upon the design of the crystal (not shown) used in the AOTF 4 and the required wavelength range, the acoustic frequency is several MHz to several hundred MHz.

The output power at an adjusted impedance, to be coupled into the crystal (not shown) used in the AOTF 4, should be sufficient to drive the crystal into saturation and provide maximum modulation efficiency. In the preferred embodiment the sweep oscillator 11 is tuned to different output frequencies by a high impedence analog input. An analog control input 37 can be provided by a preset or controlled analog voltage source. In this embodiment a controlled voltage analog output 38 is ensured by a digital-to-analog converter (DAC) 12, which is driven by a microcomputer controller 13 through a standard computer communication line 39.

The signal from the detector 10 is introduced into a preamplifier 14 and the output of the preamplifier 14 is connected to the signal output of a lock-in amplifier (LIA) 15. An optional prefilter 40 may enhance the signal of known modulation frequency to suppress random noise of other frequencies. The LIA 15 can generate its own reference signal by forming the amplified detector signal itself. An external reference signal 20 is provided and connected to the reference input of the LIA 15.

A signal generator circuit 18 generates sinusoidal or rectangular output, which is connected to a summation circuit 21, and a corresponding reference signal 20. Signals 19 and 38 are added to provide a combined output 37 for wavelength selection and wavelength modulation, respectively. A regulated power supply 17 is connected to the light source 1 to provide constant, noise-free light flux.

In one specific example of the preferred embodiment, the light source is a 50 watt tungstenhalogen lamp driven by a 5 volt DC collimating lens such as an f-17 mm aspheric lens, as made by Melles Griot of Irvine, California. The pair of polarizers can be iodine dyed polyvinyl-alcohol type sheet polarizers for the near-infrared region such as Model 27360 made by Oriel Corporation of Stratford, Connecticut. The acousto-optic tunable filter 4 is, for example, Model EFL-F20R3A made by Matsushita Electronic Components Company of Kadoma, Japan, with an optical aperture of 7 x 7 mm. The optical tuning range is 1.4 - 2.5 μm, with a deflection efficiency greater than 70 percent. The fastest wavelength access time is 11 μs.

The optical resolution varies as a function of scan speed and the efficiency of the collimation of the input light.

The AOTF 4 is powered by, for example, a Model N-2117 sweep oscillator made by Interactive Radiation Inc. of Northvale, New Jersey. The tunable output of the sweep oscillator is selectable in the range of 34 - 63 MHz by analog input voltages between 0 - 6.5 volts. In this example, the sweep oscillator is controlled by, for example, a Model 59501B Isolated DAC/Power Supply Programmer made by Hewlett-Packard of Palo Alto, California, and an F34 Function Generator made by Interstate Electronics Corporation. The base wavelength is selected through, for example, an HPIB bus interface accessed from an HP 85A Microcomputer Controller made by Hewlett-Packard of Palo Alto, California.

For detection, lead sulfide detectors (10x10 mm) of the type sold by Infrared Industries Inc., were used at ambient temperature. The optical data was manipulated for composition analysis by the HP 85A microcomputer.

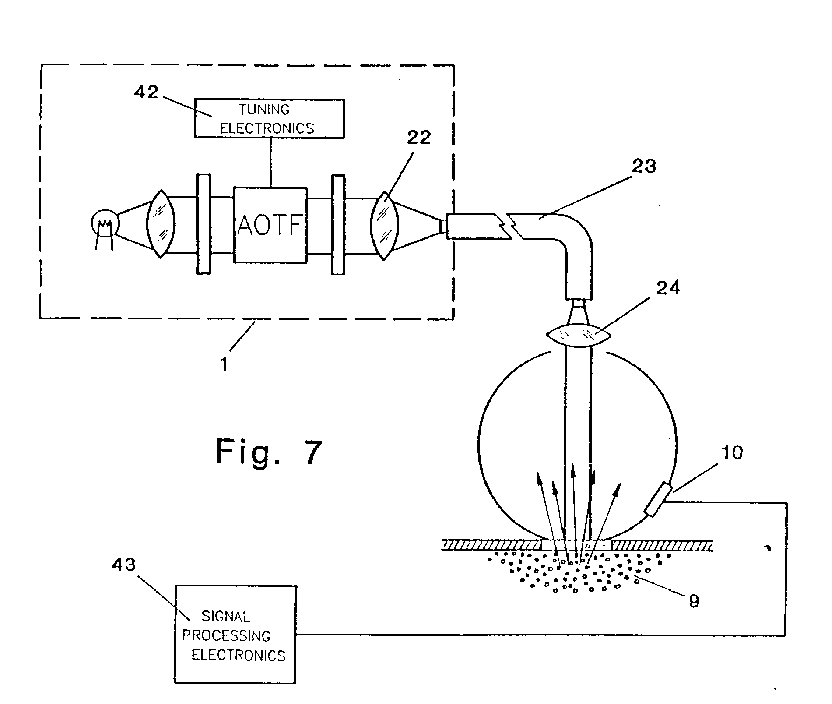

In another specific example of the preferred embodiment as shown in Fig. 7, the optical head was separated from the main instrument body by several feet. An instrument housing 41 contained a light source, the AOTF 4, the polarizers 3 and 5 and related electronics 42, with the additional focusing lens 22 (f=25 mm aspheric lens) as made by Melles Griot of Irvine, California, and the fiber optics 23.

The modulated light of the selected wavelength is coupled by focusing lens 22 into fiber optic cable 23, capable of carrying the near-infrared radiation to a remote test point, the maximum distance being determined by the attenuation over the length of the fiber. At the remote location of this example, such as at the site of the chemical composition measurement for process control, light irradiates the sample 9 directly or as shown in Fig. 7 through the collimating lens 24. In the case of solid samples, the reflected light is collected by an integrating sphere onto the detector 10. The signal is fed into the electronic processing signal unit 43.

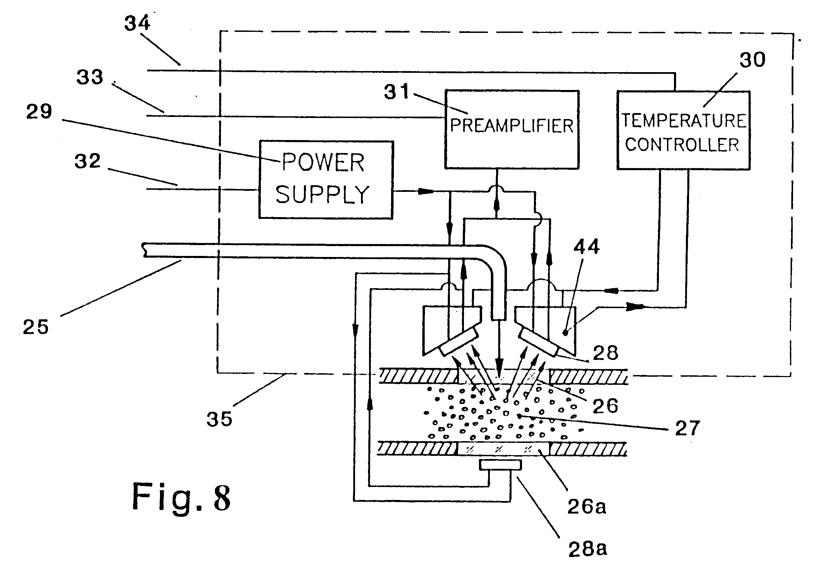

In a further specific example, a simplified schematic block diagram of the remote head of the preferred embodiment is shown in Fig. 8. The remote head contains the illuminating fiber optics 25 which is shown without any further collimation or refocusing and without collection optics. The reflection detectors 28 are mounted on temperature controlled blocks, temperature controlled by a temperature regulator circuit 30 powered through a supply connection 34. A thermistor 44 provides the control signal for the temperature regulator circuit 30.

In this example, the detectors used are lead sulfide detectors biased to about 200 volts DC by a regulated power supply 29, powered by line voltage 22 or germanium detectors without further temperature control. In yet another example, a silicon or germanium detector 28a is placed on the other side of a sample layer 27, for transmittance measurement. The sample is illuminated through an optical window 26, and the light is measured in this latter example through an optical window 26a. The small signal from the detectors is amplified by preamplifier 31 and the amplified signal is transmitted through a signal line 33 to the main instrument electronics. It will be appreciated that the simple optical head arrangement makes it possible to couple more than one remote bead to one central instrument unit with the help of optical and electronic multiplexing for multipoint process analytical applications.

In any of the above examples, all the tuning schemes of Figs. 3 and 4 can be used. In order to minimize the error of the analysis, the timing of the wavelength change (base wavelength change) need not be equal.

## Claims

1. An apparatus for providing rapid random wavelength access for optical analysis of a sample, comprising a light source (1), an acousto-optic tunable filter (4) positioned to receive light from the light source (1) and provide emerging tuned output beams, means (3,5) to select a predetermined number of selected tuned output beams from the acousto-optic tunable filter, an electronic tunable oscillator (11) connected to said acousto-optic tunable filter (4), electronic means (13,18) providing timing and logic for wavelength selection via said electronic tunable oscillator and means (10,14,15) to collect and amplify the tuned output beams from the sample, whereby means (6) are provided to direct the tuned output beams from the acousto-optic tunable filter (4) onto the sample for the collecting means (10) to collect the beams after reflection from or transmission through the sample, and whereby the electronic means (13,18) comprises means (18) to generate a predetermined periodic signal (19), means (12) for generating a non-periodic signal (38) and means (26) for combining the periodic signal with the non-periodic signal to provide a control input signal (37) to the electronic tunable oscillator (11) to permit optical analysis of at least two optical qualities of said sample.

2. An apparatus as claimed in claim 1, characterised in that the non-periodic signal has two amplitudes such that the control input signal has more than two magnitudes corresponding to optical analysis wavelengths ($\lambda_1$, $\lambda_2$) for measuring corresponding discrete qualities of the sample.

3. An apparatus as claimed in claim 1, characterised by an electronic signal generator means to deactivate the input to the acousto-optic tunable filter (4) according to a predetermined reference frequency to provide modulation of light intensity for phase sensitive detection.

4. An apparatus as claimed in claim 1, characterised by optical focusing means and a fiber optic connection (25) between said predetermined number of selected tuned output beams and said sample.

5. An apparatus as claimed in claim 1, characterised by a fiber optic coupling between said sample and said detection means.

6. An apparatus as claimed in claim 1, characterised in that said means (18) to generate a periodic signal comprises a square or sine-wave generator.

7. An apparatus as claimed in claim 1, characterised in that said electronic means (13,18) providing timing and logic for wavelength selection includes a computer controlled digital-to-analog converter (12), said means (18) for generating a predetermined periodic signal includes a signal generator having a periodic signal output (19) connected such that the output from the computer controlled digital-to-analog converter (12) and the periodic signal output are combined to provide said input signal (37) to the electronic tunable oscillator means (11).

8. An apparatus as claimed in claim 1, characterised in that the means to collect the tuned output beams comprises a detector (10) formed from at least one material selected from the group consisting of germanium, lead sulfide, lead selenide or silicon.

9. An apparatus as claimed in claim 1, characterised by means to select predetermined tuned beams according to their direction of propagation.

10. An apparatus as claimed in claim 1, characterised by a first polarizing means (3) positioned to select at least one polarization direction from light emerging from said light source (1).

11. An apparatus as claimed in claim 10, characterised by a second polarizing means (5) positioned to select one of the emerging tuned output beams.

12. A method of optical concentration analysis of a sample wherein different wavelengths of monochromatic light are selected using an acousto-optic tunable filter and are collected from the sample and their intensities are measured, whereby a rapid periodic alternation is made between preselected wavelength pairs to permit optical analysis of at least two optical qualities of the sample, and the concentration of the sample is determined by substituting into a calibration equation the intensities at different wavelengths ($\lambda_1$, $\lambda_2$) or intensity differences at various wavelengths, of the light reflected from or transmitted through the sample.

13. A method as claimed in claim 12, characterised in that the selection of wavelengths is such that each wavelength or wavelength pair ($\lambda_1$, $\lambda_2$) is selected for different time intervals.

14. A method as claimed in claim 12, characterised in that the selection of wavelength is such that a base wavelength and a predetermined difference wavelength are selected, the base wavelength being tuned to a first predetermined value while the difference wavelength is maintained at a first constant magnitude to permit switching from the base wavelength by a wavelength magnitude corresponding to the predetermined difference wavelength.

15. A method as claimed in claim 14, characterised in that the base wavelength is tuned to a second predetermined value ($\lambda_3$) while maintaining the difference wavelength at said first constant magnitude.

16. A method as claimed in claim 14, characterised in that the base wavelength is tuned to a second predetermined value ($\lambda_3$) while the difference wavelength is changed to a second constant magnitude.

17. A method as claimed in claim 12, characterised in that the wavelength selection is accomplished by generating a predetermined periodic signal cooperable with a non-periodic signal and combining the periodic signal with the non-periodic signal.

**Patentansprüche**

1. Vorrichtung zur Schaffung eines schnellen wahlfreien wellenlängenzugriffs zur optischen Analyse einer Probe mit einer Lichtquelle (1), einem opto-akustisch abstimmbaren Filter (4), das zum Empfang von Licht aus Lichtquelle (1) und zur Bereitstellung eines abgestimmten austretenden Lichtstrahls angeordnet ist, Mitteln (3, 5), um eine vorbestimmte Anzahl vom opto-akustisch abstimmbaren Filter (4) austrenden ausgewählten abgestimmten Lichtstrahlen zu selektieren, einem mit dem opto-akustisch abstimmbaren Filter (4) verbundenen elektronisch abstimmbaren Oszillator (11), elektronischen Mitteln (13, 18) zum Bereitstellen einer Zeitsteuerung und einer Logik zur Auswahl von wellenlängen mittels des elektronisch abstimmbaren Oszillators und Mitteln (10, 14, 15) zum Sammeln und Verstärken der abgestimmten, von der Probe ausgehenden Lichtstrahlen, wobei Mittel (6) vorgesehen sind, um die abgestimmten vom opto-akustisch abstimmbaren Filter (4) austretenden Lichtstrahlen für die Sammelvorrichtung (10) auf die Probe zu richten, um die Strahlen nach Reflexion von oder Transmission durch die Probe zu sammeln, und wobei die Elektronik (13, 18) Mittel (18) zum Erzeugen eines vorbestimmten periodischen Signals (19), Mittel (12) zum Erzeugen eines nichtperiodischen Signals (38) und Mittel (26) zum Kombinieren des periodischen Signals mit dem nichtperiodischen Signal aufweisen, um ein Eingangssteuersignal (37) für den elektronisch abstimmbaren Oszillator (11) bereitzustellen, damit die optische Analyse wenigstens zweier optischer Eigenschaften der Probe ermöglicht wird.

2. Vorrichtung nach Anspruch 1, **dadurch gekennzeichnet,** daß das nichtperiodische Signal zwei Amplituden aufweist, so daß das Eingangssteuersignal zur Messung der diskreten Eigenschaften der Probe aus mehr als zwei Größen entsprechend der optischen Analysewellenlängen (Lambda$_1$, Lambda$_2$) besteht.

3. Vorrichtung nach Ansprurh 1, **gekennzeichnet durch** einen elektronischen Signalgenerator mit Mitteln, um entsprechend einer vorgewählten Bezugsfrequenz den Eingang des opto-akustisch abstimmbaren Filters (4) zu deaktivieren, damit Lichtintensität für den phasengesteuerten Empfang bereitgestellt wird.

4. Vorrichtung nach Anspruch 1, **gekennzeichnet durch** durch Mittel zum optischen Fokussieren und eine faseroptische Verbindung (25) zwischen der vorbestimmten Anzahl von selektierten, abgestimmten ausgehenden Lichtstrahlen und der Probe.

5. Vorrichtung nach Anspruch 1, **gekennzeichnet durch** eine faseroptische Verbindung zwischen der Probe und den Mitteln zum Empfang.

6. Vorrichtung nach Anspruch 1, **dadurch gekennzeichnet**, daß die Mittel (18) zum Erzeugen eines periodischen Signals einen Rechteck- oder Sinuswellengenerator aufweisen.

7. Vorrichtung nach Anspruch 1, **dadurch gekennzeichnet**, daß die Elektronik (13, 18) zum Bereitstellen einer Zeitsteuerung und Logik zur wellenlängenauswahl einen rechnergesteuerten Digital/Analogwandler (12) und, die Mittel (18) zum Erzeugen eines vorbestimmten periodischen Signals einen Signalgenerator mit einem periodischen Signalausgang (19) aufweisen, und sie derart verbunden sind, daß der Ausgang des rechnergesteuerten Digital/Analogwandlers (12) und das periodische Ausgangssignal kombiniert werden, um das Eingangssignal (37) für den elektronisch abstimmbaren Oszillator (11) zu liefern.

8. Vorrichtung nach Anspruch 1, **dadurch gekennzeichnet**, daß die Mittel zum Sammeln der abgestimmten austretenden Lichtstrahlen einen Detektor (10) aufweisen, der aus wenigstens einem Material besteht, das aus der Gruppe Germanium, Bleisulfid, Bleiselenid oder Silizium ausgewählt ist.

9. Vorrichtung nach Anspruch 1, **gekennzeichnet durch** Mittel zur Auswahl vorbestimmter abgestimmter Lichtstrahlen entsprechend ihrer Ausbreitungsrichtung.

10. Vorrichtung nach Anspruch 1, **gekennzeichnet durch** Mittel (3), die zu einer ersten Polarisierung angeordnet sind, um wenigstens eine Polarisationsrichtung des von der lichtquelle (1) austretenden Lichts auszuwählen.

11. Vorrichtung nach Anspruch 10, **gekennzeichnet durch** Mittel (5), die zu einer zweiten Polarisierung angeordnet sind, um einen der austretenden abgestimmten Ausgangslichtstrahlen auszuwählen.

12. Verfahren zur optischen Konzentrationsanalyse einer Probe, wobei verschiedene Wellenlängen monochromatischen Lichts mittels eines opto-akustisch abstimmbaren Filters ausgewählt und von der Probe gesammelt und ihre Intensitäten gemessen werden, wobei eine schnelle periodische Änderung zwischen vorgewählten Wellenlängenpaaren erfolgt, um die optische Analyse wenigstens zweier optischer Eigenschaften der Probe zu ermöglichen, und wobei die Konzentration der Probe durch Einsetzen der Intentsitäten bei verschiedenen Wellenlängen (Lambda$_1$, Lambda$_2$) oder Intensitätsdifferenzen bei verschiedenen Wellenlängen des von der Probe reflektierten oder durch die Probe hindurchtretenden Lichts in eine Kalibrierungsgleichung bestimmt wird.

13. Verfahren nach Anspruch 12, **dadurch gekennzeichnet**, daß die Auswahl der Wellenlängen, so erfolgt, daß jede Wellenlänge oder jedes Wellenlängenpaar (Lambda$_1$, Lambda$_2$) für unterschiedliche Zeitintervalle ausgewählt wird.

14. Verfahren nach Anspruch 12, **dadurch gekennzeichnet**, daß die Wellenlängenauswahl derart erfolgt, daß eine Bezugswellenläge und eine vorbestimmte wellenlängendifferenz ausgewählt werden, wobei die Bezugswellenlänge auf einen ersten vorbestimmten Wert abgestimmt wird, während die Wellenlängendifferenz auf einer ersten konstanten Größe gehalten wird, um das Umschalten von der Bezugswellenlänge mit einer Wellenlängengröße gemäß der vorbestimmten Wellenlängendifferenz zu erlauben.

15. Verfahren nach Anspruch 14, **dadurch gekennzeichnet**, daß die Bezugswellenlänge auf einen zweiten vorbestimmten Wert (Lambda$_3$) abgestimmt wird, während die Wellenlängendifferenz mit der ersten konstanten Größe beibehalten wird.

16. Verfahren nach Anspruch 14, **dadurch gekennzeichnet**, daß die Basiswellenlänge auf einen zweiten vorbestimmten Wert (Lambda$_3$) abgestimmt wird, während die Wellenlängendifferenz zu einer zweiten konstanten Größe verändert wird.

17. Verfahren nach Anspruch 12, **dadurch gekennzeichnet**, daß die Wellenlängenauswahl durch Erzeugen eines vorbestimmten periodischen Signals, das mit einem nichtperiodischen Signal zusammenwirken kann, und Kombinieren des periodischen Signals mit dem nichtperiodischen Signal durchgeführt wird.

**Revendications**

1. Appareil permettant d'obtenir un accès aléatoire rapide à différentes longueurs d'onde pour effectuer une analyse optique d'un échantillon, comprenant une source de lumière (1), un filtre acousto-optique accordable (4) monté de manière à recevoir la lumière de la source de lumière (1) et à fournir des faisceaux de sortie accordés, des moyens (3, 5) permettant de sélectionner un nombre prédéterminé de faisceaux de sortie accordés provenant du filtre acousto-optique accordable, un oscillateur électronique accordable (11) relié au filtre acousto-optique accordable (4), des moyens électroniques (13, 18) fournissant une synchronisation et une logique de sélection de longueur d'onde par l'intermédiaire de l'oscillateur électronique accordable, et des moyens (10, 14, 15) permettant de capter et d'amplifier les faisceaux de sortie accordés provenant de l'échantillon, appareil dans lequel des moyens (6) sont prévus pour diriger sur l'échantillon les faisceaux de sortie accordés provenant du filtre acousto-optique accordable (4), de façon que les moyens de captage (10) puissent capter les faisceaux après réflexion sur l'échantillon ou émission à travers celui-ci, et dans lequel les moyens électroniques (13, 18) comprennent des moyens (18) pour produire un signal périodique prédéterminé (19), des moyens (12) pour produire un signal non périodique (38), et des moyens (26) pour combiner le signal périodique avec le signal non périodique de manière à fournir un signal d'entrée de commande (37) à l'oscillateur électronique accordable (11) pour permettre l'analyse optique d'au moins deux qualités optiques de l' échantillon.

2. Appareil selon la revendication 1, caractérisé en ce que le signal non périodique présente deux amplitudes de façon que le signal d'entrée de commande comporte plus de deux amplitudes correspondant à des longueurs d'onde d'analyse optique ($\lambda 1$, $\lambda 2$) permettant de mesurer des qualités discrètes correspondantes de l'échantillon.

3. Appareil selon la revendication 1, caractérisé en ce qu'il comprend des moyens engendrant des signaux électroniques pour désactiver l'entrée du filtre acousto-optique accordable (4) en fonction d'une fréquence de référence prédéterminée, de manière à produire une modulation d'intensité lumineuse pour une détection sensible à la phase.

4. Appareil selon la revendication 1, caractérisé en ce qu'il comprend des moyens de focalisation optique et une liaison à fibre optique (25) entre le nombre prédéterminé de faisceaux de sortie accordés sélectionnés, et l'échantillon.

5. Appareil selon la revendication 1, caractérisé en ce qu'il comprend un couplage à fibre optique entre l'échantillon et les moyens de détection.

6. Appareil selon la revendication 1, caractérisé en ce que les moyens (18) de production d'un signal périodique comprennent un générateur d'onde carrée ou sinusoïdale.

7. Appareil selon la revendication 1, caractérisé en ce que les moyens électroniques (13, 18) fournissant la synchronisation et la logique de sélection de longueur d'onde comprennent un convertisseur numérique-analogique (12) à commande par ordinateur, et en ce que les moyens (18) de production d'un signal périodique prédéterminé comprennent un générateur de signal comportant une sortie de signal périodique (19) branchée de façon que la sortie du convertisseur numérique-analogique (12) à commande par ordinateur, et la sortie de signal périodique, soient combinées pour fournir le signal d'entrée (37) à l'oscillateur électronique accordable (11).

8. Appareil selon la revendication 1, caractérisé en ce que les moyens destinés à capter les faisceaux de sortie accordés comprennent un détecteur (10) formé d'au moins un matériau choisi dans le groupe comprenant le germanium, le sulfure de plomb, le séléniure de plomb ou le silicium.

9. Appareil selon la revendication 1, caractérisé en ce qu'il comprend des moyens pour sélectionner des faisceaux accordés prédéterminés en fonction de leur direction de propagation.

10. Appareil selon la revendication 1, caractérisé en ce qu'il comprend des premiers moyens de polarisation (3) placés de manière à sélectionner au moins une direction de polarisation dans la lumière sortant de la source de lumière.

11. Appareil selon la revendication 10, caractérisé en ce qu'il comprend des seconds moyens de polarisation (5) placés de manière à sélectionner l'un des faisceaux de sortie accordés qui apparaissent.

12. Procédé d'analyse optique de concentration d'un échantillon dans lequel différentes longueurs d'onde de lumière monochromatique sont sélectionnées en utilisant un filtre acousto-optique accordable et sont captés à partir de l'échantillon tandis qu'on mesure également leurs intensités, dans lequel une alternance périodique rapide est effectuée entre des paires de longueurs d'onde présélectionnées pour permettre l'analyse optique d'au moins deux qualités optiques de l'échantillon, et la concentration de l'échantillon est déterminée par substitution, dans une équation d'étalonnage, des intensités à différentes longueurs d'onde ($\lambda 1$, $\lambda 2$) ou des différences d'intensités à différentes longueurs d'onde, de la lumière réfléchie par l'échantillon ou émise à travers celui-ci.

13. Procédé selon la revendication 12, caractérisé en ce que la sélection des longueurs d'onde est telle que chaque longueur d'onde ou paire de longueurs d'onde ($\lambda 1$, $\lambda 2$) est sélectionnée pour des intervalles de temps différents.

14. Procédé selon la revendication 12, caractérisé en ce que la sélection de longueurs d'onde est telle qu'on sélectionne une longueur d'onde de base et une longueur d'onde de différence prédéterminée, la longueur d'onde de base étant accordée sur une première valeur prédéterminée tandis que la longueur d'onde de différence est maintenue à une première amplitude constante pour permettre une commutation, à partir de la longueur d'onde de base, par une amplitude de longueur d'onde correspondant à la longueur d'onde de différence prédéterminée.

15. Procédé selon la revendication 14, caractérisé en ce que la longueur d'onde de base est accordée sur une seconde valeur prédéterminée (λ3) tandis qu'on maintient la longueur d'onde de différence à la première amplitude constante.

16. Procédé selon la revendication 14, caractérisé en ce que la longueur d'onde de base est accordée sur une seconde valeur prédéterminée (λ3) tandis qu'on fait passer la longueur d'onde de différence à une seconde amplitude constante.

17. Procédé selon la revendication 12, caractérisé en ce que la sélection de longueur d'onde est effectuée en produisant un signal périodique prédéterminé pouvant coopérer avec un signal non périodique et en combinant le signal périodique avec le signal non périodique.

Unpolarized input

Acousto-optic crystal

RF input

A
B
C

Horizontal polarized input

Polarizer 1

Polarizer 2

RF input

A

Vertical polarized input

Polarizer 1

Polarizer 2

RF input

C

A. Tuned extraordinary light
B. 0th light (transmitted)
C. Tuned ordinary light

## Fig 1

Fig. 2

EP 0 250 070 B1

Fig. 3

EP 0 250 070 B1

a.

$u_e$

$u_{\lambda_1}$ $u_{\lambda_2}$ $u_{\lambda_{Ref}}$

$t$

b.

$u_{\lambda_2} - u_{\lambda_1} = u_{\lambda_4} - u_{\lambda_3}$

$u_e$

$u_{\lambda_4}$ $u_{\lambda_3}$ $u_{\lambda_2}$ $u_{\lambda_1}$

$t$

c.

$u_{\lambda_2} - u_{\lambda_1} \neq u_{\lambda_4} - u_{\lambda_3}$

$u_e$

$u_{\lambda_4}$ $u_{\lambda_3}$ $u_{\lambda_2}$ $u_{\lambda_1}$

$t$

Fig. 4

15

Fig. 5

Fig. 6

Fig. 7

Fig. 8

TEMPERATURE CONTROLLER

PREAMPLIFIER

POWER SUPPLY

30

31

29

32

33

34

35

25

28

44

27

26

26a

28a